# NEW EUROPEAN PATENT SPECIFICATION

(11) **EP 3 078 807 B2**
(45) Date of publication and mention of the opposition decision: **25.01.2023**
(45) Mention of the grant of the patent: 11.03.2020
(21) Application number: 16164214.5
(22) Date of filing: 07.04.2016
(51) Int. Cl.: F01D 5/18, B22C 7/00, B22C 9/24, F01D 9/04, F01D 11/08, F01D 25/12, F02C 3/00, F02C 7/18

(54) **COOLING PASSAGES FOR A GAS TURBINE ENGINE COMPONENT**
KÜHLKANÄLE FÜR EINE GASTURBINENMOTORKOMPONENTE
PASSAGES DE REFROIDISSEMENT POUR COMPOSANT DE MOTEUR À TURBINE À GAZ

(30) Priority: 09.04.2015 US 201514682207
(43) Date of publication of application: 12.10.2016
(73) Proprietor: Raytheon Technologies Corporation, Farmington, CT 06032 (US)
(72) Inventor: THORNTON, Lane, Ellington, CT 06029 (US); SLAVENS, Thomas N., Moodus, CT 06469 (US)
(74) Representative: Dehns

(56) References cited:
- EP-A1- 1 813 365
- WO-A1-02/49795
- US-A- 4 672 727
- US-A1- 2013 139 990
- US-B1- 7 766 617
- US-B2- 7 510 376

## Description

### BACKGROUND

The present invention relates to a method of forming a cooling passage in a gas turbine component.

A gas turbine engine typically includes a fan section, a compressor section, a combustor section, and a turbine section. Air entering the compressor section is compressed and delivered into the combustion section where it is mixed with fuel and ignited to generate a high-speed exhaust gas flow. The high-speed exhaust gas flow expands through the turbine section to drive the compressor and the fan section.

Both the compressor and turbine sections may include alternating series of rotating blades and stationary vanes that extend into the core flow path of the gas turbine engine. For example, in the turbine section, turbine blades rotate and extract energy from the hot combustion gases that are communicated along the core flow path of the gas turbine engine. The turbine vanes, which generally do not rotate, guide the airflow for the next set of blades.

Turbine vanes, blades, combustors, and other components include film cooling features to provide a boundary layer of cooling fluid along external surfaces, which protects the component from the hot combustion gases in the core flow path. The film cooling features include passages extending through a wall of the cooling component that may include a complex geometry that is difficult to manufacture. Therefore, there is a need to increase the efficiency of the film cooling features and the ease of manufacturing the film cooling features.

US 2013/139990 A1, US 7766617 B1 and US 4672727 A may be useful in understanding the background of the present disclosure.

### SUMMARY

In a further embodiment of any of the above, the plurality of metering portions is formed using a machining process.

In a further embodiment of any of the above, the component includes a wall having a first surface opposing a second surface.

In a further embodiment of any of the above, the first surface is located on an inner side of the component and the second surface is located on an outer side of the component.

In a further embodiment of any of the above, at least one diffusion portion includes an increasing cross-sectional area.

In a further embodiment of any of the above, the method includes forming a mold having a plurality of diffusion protrusions for forming the plurality of diffusion portions.

### BRIEF DESCRIPTION OF THE DRAWINGS

Figure 1 is a schematic view of an example gas turbine engine.
Figure 2 is a perspective view of a blade.
Figure 3 is a perspective view of a vane.
Figure 4 is a sectional view of example cooling holes.
Figure 5 is an enlarged view of the example cooling holes.
Figure 6 is a sectional cast view of an example ceramic shell.
Figure 7 is a sectional view showing an example diffuser portion.
Figure 8 is a sectional view showing an example metering portion with the example diffuser portion.

### DETAILED DESCRIPTION

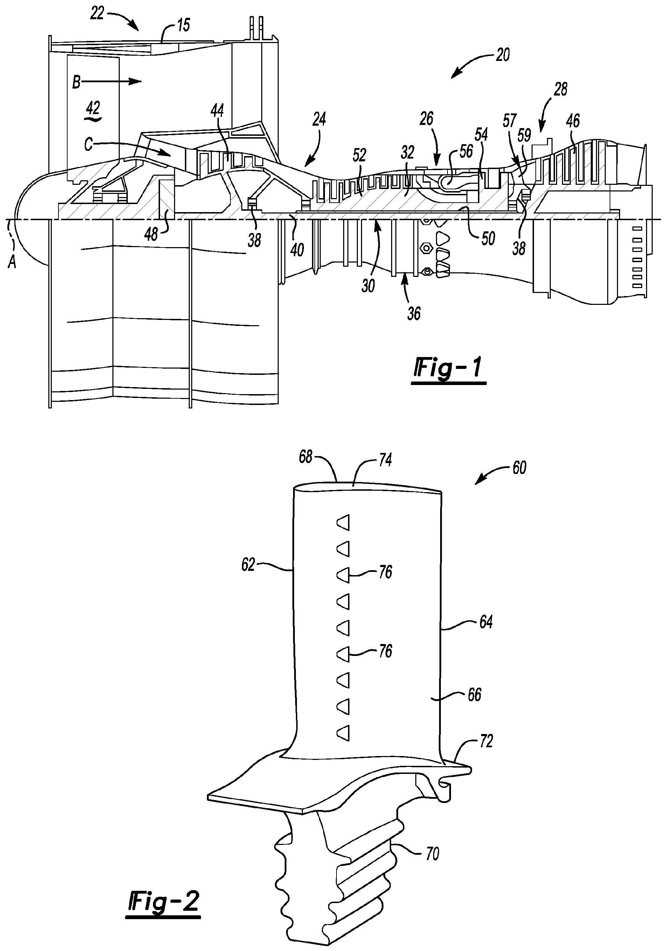

Figure 1 schematically illustrates a gas turbine engine 20. The gas turbine engine 20 is disclosed herein as a two-spool turbofan that generally incorporates a fan section 22, a compressor section 24, a combustor section 26 and a turbine section 28. Alternative engines might include an augmentor section (not shown) among other systems or features. The fan section 22 drives air along a bypass flow path B in a bypass duct defined within a nacelle 15, while the compressor section 24 drives air along a core flow path C for compression and communication into the combustor section 26 then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines including three-spool architectures.

The exemplary engine 20 generally includes a low speed spool 30 and a high speed spool 32 mounted for rotation about an engine central longitudinal axis A relative to an engine static structure 36 via several bearing systems 38. It should be understood that various bearing systems 38 at various locations may alternatively or additionally be provided, and the location of bearing systems 38 may be varied as appropriate to the application.

The low speed spool 30 generally includes an inner shaft 40 that interconnects a fan 42, a first (or low) pressure compressor 44 and a first (or low) pressure turbine 46. The inner shaft 40 is connected to the fan 42 through a speed change mechanism, which in exemplary gas turbine engine 20 is illustrated as a geared architecture 48 to drive the fan 42 at a lower speed than the low speed spool 30. The high speed spool 32 includes an outer shaft 50 that interconnects a second (or high) pressure compressor 52 and a second (or high) pressure turbine 54. A combustor 56 is arranged in exemplary gas turbine 20 between the high pressure compressor 52 and the high pressure turbine 54. A mid-turbine frame 57 of the engine static structure 36 is arranged generally between the high pressure turbine 54 and the low pressure turbine 46. The mid-turbine frame 57 further supports bearing systems 38 in the turbine section 28. The inner shaft 40 and the outer shaft 50 are concentric and rotate via bearing systems 38 about the engine central longitudinal axis A which is collinear with their longitudinal axes.

The core airflow is compressed by the low pressure compressor 44 then the high pressure compressor 52, mixed and burned with fuel in the combustor 56, then expanded over the high pressure turbine 54 and low pressure turbine 46. The mid-turbine frame 57 includes airfoils 59 which are in the core airflow path C. The turbines 46, 54 rotationally drive the respective low speed spool 30 and high speed spool 32 in response to the expansion. It will be appreciated that each of the positions of the fan section 22, compressor section 24, combustor section 26, turbine section 28, and fan drive gear system 48 may be varied. For example, gear system 48 may be located aft of combustor section 26 or even aft of turbine section 28, and fan section 22 may be positioned forward or aft of the location of gear system 48.

The engine 20 in one example is a high-bypass geared aircraft engine. In a further example, the engine 20 bypass ratio is greater than about six (6), with an example embodiment being greater than about ten (10), the geared architecture 48 is an epicyclic gear train, such as a planetary gear system or other gear system, with a gear reduction ratio of greater than about 2.3 and the low pressure turbine 46 has a pressure ratio that is greater than about five. In one disclosed embodiment, the engine 20 bypass ratio is greater than about ten (10:1), the fan diameter is significantly larger than that of the low pressure compressor 44, and the low pressure turbine 46 has a pressure ratio that is greater than about five 5:1. Low pressure turbine 46 pressure ratio is pressure measured prior to inlet of low pressure turbine 46 as related to the pressure at the outlet of the low pressure turbine 46 prior to an exhaust nozzle. The geared architecture 48 may be an epicycle gear train, such as a planetary gear system or other gear system, with a gear reduction ratio of greater than about 2.3:1. It should be understood, however, that the above parameters are only exemplary of one embodiment of a geared architecture engine and that the present invention is applicable to other gas turbine engines including direct drive turbofans.

A significant amount of thrust is provided by the bypass flow B due to the high bypass ratio. The fan section 22 of the engine 20 is designed for a particular flight condition -- typically cruise at about 0.8 Mach and about 10,668 meters (35,000 feet). The flight condition of 0.8 Mach and 10,668 m (35,000 ft), with the engine at its best fuel consumption - also known as "bucket cruise Thrust Specific Fuel Consumption ('TSFC')" - is the industry standard parameter of kg (lbm) of fuel being burned divided by N (lbf) of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in meters/second (ft/sec) divided by an industry standard temperature correction of [(Tram K) / (288.2 K)]^{0.5} ([(Tram °R) / (518.7 °R)]^{0.5}). The "Low corrected fan tip speed" as disclosed herein according to one non-limiting embodiment is less than about 350.5 m/s (1150 ft / second).

The example gas turbine engine includes fan 42 that comprises in one non-limiting embodiment less than about twenty-six (26) fan blades. In another non-limiting embodiment, fan section 22 includes less than about twenty (20) fan blades. Moreover, in one disclosed embodiment low pressure turbine 46 includes no more than about six (6) turbine rotors schematically indicated at 34. In another non-limiting example embodiment low pressure turbine 46 includes about three (3) turbine rotors. A ratio between number of fan blades 42 and the number of low pressure turbine rotors is between about 3.3 and about 8.6. The example low pressure turbine 46 provides the driving power to rotate fan section 22 and therefore the relationship between the number of turbine rotors 34 in low pressure turbine 46 and number of blades 42 in fan section 22 disclose an example gas turbine engine 20 with increased power transfer efficiency.

Figure 2 is a perspective view of a blade 60, such as a rotor airfoil, for the gas turbine engine 20, as shown in Figure 1, or for another turbomachine. The blade 60 extends axially from a leading edge 62 to a trailing edge 64, defining a pressure sidewall 66 and a suction sidewall 68.

The pressure and suction sidewalls 66, 68 form the major opposing surfaces or walls of the blade 60, extending axially between the leading edge 62 and trailing edge 64, and radially outward from a root section 70, adjacent inner diameter (ID) platform 72, to a distal end 74 opposite the ID platform 72. In some designs, the distal end 74 may include a shroud forming an outer diameter (OD) platform.

Cooling passages 76 are located on one or more surfaces of the blade 60. In the illustrated example, the cooling passages 76 are located along the pressure sidewall 66 of the blade 60. In another example, the cooling passages 76 could be located adjacent the leading edge 62, the trailing edge 64, the pressure sidewall 66, the suction sidewall 68, or a combination thereof.

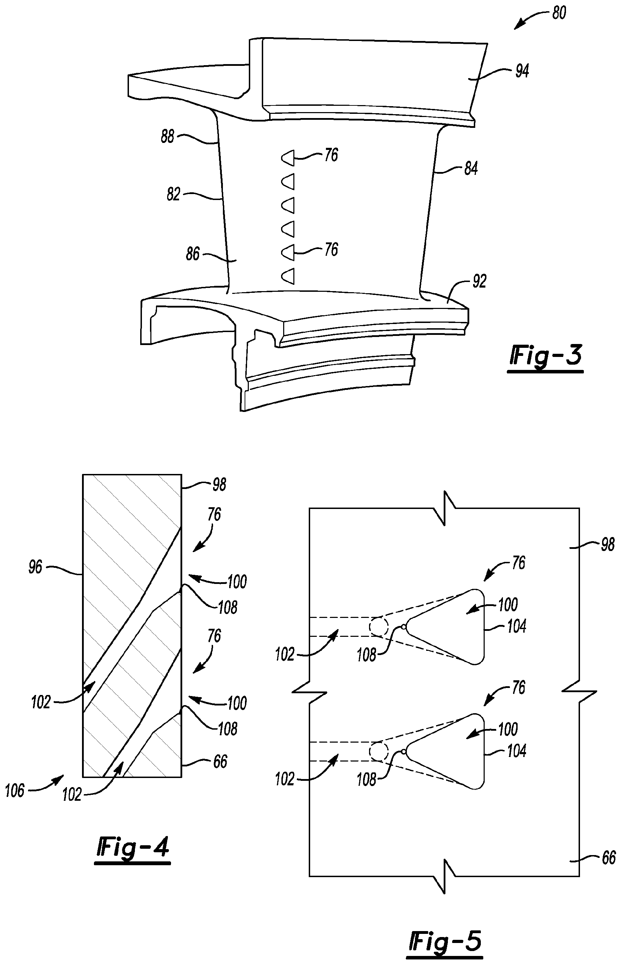

Figure 3 is a perspective view of an example vane 80, such as a stator airfoil, for the gas turbine engine 20, as shown in Figure 1, or for another turbomachine. The vane 80 extends axially from a leading edge 82 to a trailing edge 84, defining pressure sidewall 86 (front) and suction sidewall 88 (back) therebetween. The pressure and suction sidewalls 86, 88 extend from an ID platform 92 to an outer diameter (OD) platform 94.

The cooling passages 76 are provided along one or more surfaces of the airfoil 80, for example the leading or trailing edge 82, 84, the pressure (concave) sidewall 86, the suction (convex) sidewall 88, or a combination thereof.

The blade 60 (Figure 2) and the vane 80 (Figure 3) are formed of high strength, heat resistant materials such as high temperature alloys and superalloys, and are provided with thermal and erosion-resistant coatings. The blade 60 and the vane 80 utilize the internal cooling passages 76 to reduce thermal fatigue and wear, and to prevent melting when exposed to hot gas flow in the higher temperature regions of the gas turbine engine 20 or other turbomachine. The cooling passages 76 deliver cooling fluid (e.g., steam or air from a compressor) through the outer walls of the blade and vane 60, 80 creating a thin layer (or film) of cooling fluid to protect the outer (gas path) surfaces from high temperature flow.

As shown in Figures 4 and 5, the pressure sidewall 66 includes an inner wall surface 96 and an outer wall surface 98 that are transverse to the cooling passages 76. The pressure sidewall 66 is metallic and the outer wall surface 98 can include coating layers such as a thermal barrier coating or a bonding layer.

The cooling passages 76 are oriented so that their inlets are positioned on the inner wall surface 96 and their outlets are positioned on the outer wall surface 98. During operation gas turbine engine 20, the outer wall surface 98 is in proximity to high temperature gases (e.g., combustion gases, hot air). Cooling airflow is delivered inside the pressure sidewall 66 where it exits an interior of the blade 60 through the cooling passages 76 and forms a cooling film on the outer wall surface 98.

Each of the cooling passages 76 include a metering portion 102 having a generally cylindrical cross section with a machined surface and a diffusion portion 100 having a cast surface. The diffusion portion 100 transitions between a cylindrical cross section at an inlet to a triangular cross section adjacent an outlet 104 to the diffusion portion 100. Although the outlet 104 to the diffusion portion 100 is triangular in the illustrated example, the outlet 104 to the diffusion portion 100 can be any shape as long as the outlet has a larger cross-sectional area than the inlet to the diffusion portion 100.

In the illustrated example, the metering portion 102 includes an inlet adjacent the inner wall surface 96 to allow cooling airflow to flow into the cooling passage 76 from internal passages 106 in the blade 60. The cooling air flows out of the internal passages 106 and flows through the metering section 102 the diffusion portion 100 to form a cooling film over the blade 60. The cooling passages 76 can be arranged in a linear row on pressure sidewall 66 and positioned axially so that the cooling air flows in substantially the same direction longitudinally as the high temperature gases flowing past the pressure sidewall 66.

Alternatively, the cooling passages 76 can also be located in a staggered formation or other formation on the pressure sidewall 66. Although the cooling holes 76 are described in relation to the blade 60, the cooling holes 76 in the vane 80 are similar to the cooling holes 76 in the blade 60 except where described below or shown in the Figures.The cooling passages 76 can be located on a variety of suitable components such as turbine vanes and blades, combustors, blade outer air seals, augmentors, and etc. The cooling passages 76 can be located on the pressure sidewalls 66, 86 or suction sidewalls 68, 88 of the blades 60 and the vanes 80, respectively. The cooling passages 76 can also be located on a tip or platforms of the blade 60 or vane 80.

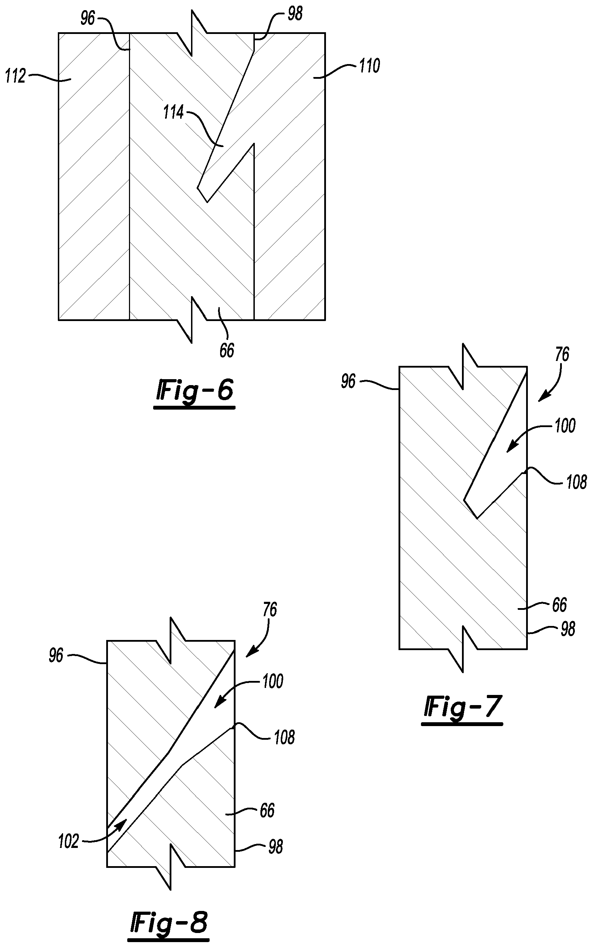

The cooling passages 76 are formed during casting process and a machining process. Figure 6 illustrates a casting for the pressure sidewall 66. The casting includes a ceramic shell 110 located adjacent the outer wall surface 98 and a ceramic core 112 located adjacent the inner wall surface 96. Prior to casting, a wax core may be located in place of the pressure sidewall 66 and replaced by the casting material during casting. The ceramic shell 110 includes a diffuser protrusion 114 that is in the shape of the diffusion portion 100 of the cooling passage 76, such that when the pressure sidewall 66 is cast, the diffusion portion 100 of the cooling passage 76 is formed. By casting the diffusion portion 100 of the cooling passage 76, the need for complicated machining is eliminated to form the diffusion portion 100. Additionally, since the diffusion portion 100 of the cooling passage 76 is formed by casting, the diffusion portion 100 is smoother than if the diffusion portion 100 was machined due to limitations of the machining process. This process uses continuous crystal grain growth to the surface of the diffuser which would be allowed with FPI inspection.

As shown in Figure 7, once the blade 60 is cast, the diffusion portion 100 of the cooling passage 76 is formed without the metering portion 102. The metering portion 102 is then formed by a simple machining process to complete cooling passage 76 as shown in Figure 8. In order to accurately machine the metering portion 102 of the cooling passage 76, a nest key 108 is located adjacent the diffuser portion 100. The nest key 108 is formed during the casting process or by a separated machining process. The nest key 108 is used as a locating feature to ensure that the metering portion 102 is properly aligned with the diffusion portion 100 to maximize flow through the cooling passage 76 by reducing mismatch between the metering portion 102 and the diffusion portion 100.

Although Figures 6-8 illustrate a method of forming the cooling passage 76 in the pressure sidewall 66 of the blade 60, the description associate with Figures 6-8 also applies to suitable components, such as turbine vanes and blades, combustors, blade outer air seals, augmentors, and etc.

The preceding description is exemplary rather than limiting in nature. Variations and modifications to the disclosed examples may become apparent to those skilled in the art that do not necessarily depart from the invention as defined by the following claims.

## Claims

1. A method of forming a cooling passage (76) in a gas turbine component (60;80) comprising:
casting a plurality of diffusion portions (100) in a component (60;80) to allow for continuous crystal grain growth to a surface of each diffusion portion (100); and
forming a plurality of metering portions (102) at least partially aligned with a corresponding one of the plurality of diffusion portions (100) in the component (60;80),
wherein
the plurality of metering portions (102) is located adjacent the first surface (96) and the plurality of diffusion portions (100) is located adjacent the second surface (98); and
the diffusion portion (100) transitions between a cylindrical inlet and a non-cylindrical outlet (104),
wherein the method further comprises locating a tool for forming the plurality of metering portions (102) relative to the diffusion portion (100) with a locating feature (108) adjacent each of the plurality of diffusion portions (100).

2. The method of claim 1, wherein the plurality of metering portions (102) is formed using a machining process.

3. The method of claim 1, wherein the component (60;80) includes a wall (66;86) having a first surface (96) opposing a second surface (98).

4. The method of claim 3, wherein the first surface (96) is located on an inner side of the component (60;80) and the second surface (98) is located on an outer side of the component (60;80).

5. The method of any of claims 1 to 4, wherein the at least one diffusion portion (100) includes an increasing cross-sectional area.

6. The method of any of claims 1 to 5, further comprising forming a mold (110) having a plurality of diffusion protrusions (114) for forming the plurality of diffusion portions (100).

## Patentansprüche

1. Verfahren zum Bilden eines Kühlkanals (76) in einer Gasturbinenkomponente (60; 80), umfassend:
Gießen einer Vielzahl von Diffusionsabschnitten (100) in einer Komponente (60; 80), um durchgehendes Kristallkornwachstum an einer Fläche jedes Diffusionsabschnittes (100) zu ermöglichen; und
Bilden einer Vielzahl von Dosierabschnitten (102), die zumindest teilweise auf einen entsprechenden aus der Vielzahl von Diffusionsabschnitten (100) in der Komponente (60; 80) ausgerichtet sind,
wobei
sich die Vielzahl von Dosierabschnitten (102) benachbart zu der ersten Fläche (96) befindet und sich die Vielzahl von Diffusionsabschnitten (100) benachbart zu der zweiten Fläche (98) befindet; und
der Diffusionsabschnitt (100) zwischen einem zylindrischen Einlass und einem nichtzylindrischen Auslass (104) übergeht,
wobei das Verfahren ferner Platzieren eines Werkzeugs, um die Vielzahl von Dosierabschnitten (102) zu bilden, relativ zu dem Diffusionsabschnitt (100) umfasst, wobei sich ein Platzierungsmerkmal (108) benachbart zu jedem aus der Vielzahl von Diffusionsabschnitten (100) befindet.

2. Verfahren nach Anspruch 1, wobei die Vielzahl von Dosierabschnitten (102) unter Anwendung eines Bearbeitungsprozesses gebildet wird.

3. Verfahren nach Anspruch 1, wobei die Komponente (60; 80) eine Wand (66; 86) beinhaltet, die eine erste Fläche (96) gegenüber einer zweiten Fläche (98) aufweist.

4. Verfahren nach Anspruch 3, wobei sich die erste Fläche (96) an einer Innenseite der Komponente (60; 80) befindet und sich die zweite Fläche (98) an einer Außenseite der Komponente (60; 80) befindet.

5. Verfahren nach einem der Ansprüche 1 bis 4, wobei der zumindest eine Diffusionsabschnitt (100) einen zunehmenden Querschnittsbereich beinhaltet.

6. Verfahren nach einem der Ansprüche 1 bis 5, ferner umfassend Bilden einer Form (110), die eine Vielzahl von Diffusionsvorsprüngen (114) aufweist, um die Vielzahl von Diffusionsabschnitten (100) zu bilden.

## Revendications

1. Procédé de formation d'un passage de refroidissement (76) dans un composant de turbine à gaz (60 ; 80) comprenant :
le coulage d'une pluralité de parties de diffusion (100) dans un composant (60 ; 80) pour permettre une croissance continue de grains cristallins sur une surface de chaque partie de diffusion (100) ; et
la formation d'une pluralité de parties de dosage (102) au moins partiellement alignée avec une partie correspondante de la pluralité de parties de diffusion (100) dans le composant (60 ; 80),
dans lequel
la pluralité de parties de dosage (102) est adjacente à la première surface (96) et la pluralité de parties de diffusion (100) est adjacente à la seconde surface (98) ; et
la partie de diffusion (100) passe entre une entrée cylindrique et une sortie non cylindrique (104),
dans lequel le procédé comprend en outre le positionnement d'un outil pour former la pluralité de parties de dosage (102) par rapport à la partie de diffusion (100) avec un élément de positionnement (108) adjacent à chacune de la pluralité de parties de diffusion (100).

2. Procédé selon la revendication 1, dans lequel la pluralité de parties de dosage (102) est formée en utilisant un processus d'usinage.

3. Procédé selon la revendication 1, dans lequel le composant (60 ; 80) comporte une paroi (66 ; 86) ayant une première surface (96) opposée à une seconde surface (98).

4. Procédé selon la revendication 3, dans lequel la première surface (96) est située sur un côté intérieur du composant (60 ; 80) et la seconde surface (98) est située sur un côté extérieur du composant (60 ; 80).

5. Procédé selon l'une quelconque des revendications 1 à 4, dans lequel l'au moins une partie de diffusion (100) comporte une zone de section transversale croissante.

6. Procédé selon l'une quelconque des revendications 1 à 5, comprenant en outre la formation d'un moule (110) ayant une pluralité de saillies de diffusion (114) pour former la pluralité de parties de diffusion (100).
